# EUROPEAN PATENT SPECIFICATION

(11) **EP 1 659 034 B1**
(45) Date of publication and mention of the grant of the patent: **28.01.2009**
(21) Application number: 05110866.0
(22) Date of filing: 17.11.2005
(51) Int. Cl.: B60R 19/34, B60R 21/34

(54) **Pedestrian protecting front bumper structure for a motor vehicle**
Fussgängerschützende vordere Stossfängerstruktur für ein Kraftfahrzeug
Structure de pare-chocs avant de véhicule pour la protection des piétons

(30) Priority: 17.11.2004 IT TO20040807
(43) Date of publication of application: 24.05.2006
(73) Proprietor: ITALDESIGN-GIUGIARO S.p.A, 10121 Torino (IT)
(72) Inventor: Rodino, Matteo, I-10129, Torino (IT)
(74) Representative: Rondano, Davide

(56) References cited:
- EP-A- 1 000 840
- EP-A- 1 314 614
- DE-A1- 10 100 875
- DE-A1- 19 635 285
- US-B1- 6 634 702

## Description

The present invention relates to a front bumper structure for a motor vehicle capable of reducing the severity of injuries to the legs of a pedestrian in case of impact, as specified in the preamble of Claim 1.

Due to the imminent entry into force of European regulations intended to ensure specific minimum safety limits for the pedestrians in case of impact against a motor vehicle, a lot of solutions are under study for providing the front bumpers with special features, both structural and operational, aiming at minimising the severity of the injuries to the legs that a pedestrian could suffer in case of impact against the front part of a motor vehicle.

European Patent Application EP 1 300 293 discloses a front bumper assembly for a motor vehicle comprising a bumper beam of relatively rigid material, such as metal, a bumper fascia forming the outer surface of the bumper assembly and a foam block interposed between the bumper beam and the bumper fascia to absorb the impact energy in case of impact against a pedestrian. The bumper fascia extends downwards and forms a lower edge having the function to retain, in case of impact against a pedestrian, the lower part of the legs of the pedestrian, thereby avoiding an unnatural bending of the legs which would cause serious damages, in particular to the knee joint. In order to stiffen the lower edge of the bumper fascia, a reinforcement structure is provided which is connected at its frontward end to the lower edge and at its rearward end to the cooling unit, to the engine or to the vehicle structure. The stiffness of the reinforcement structure is set by means of a plurality of stiffening elements, such as mouldings or ribs, which extend longitudinally or transversely.

A front bumper structure according to the preamble of Claim 1 is known from US-B1-6 634 702. This known arrangement provides for a plurality of connecting struts interposed between the lower and upper beams for reinforcing the lower beam in such a manner that it has a uniform stiffness throughout its length.

This known solutions, however, suffer from the drawback that they take all the space between the lower edge of the bumper fascia and the cooling unit or the engine, due to the presence of a plurality of stiffening elements extending longitudinally or transversely.

It is therefore an object of the present invention to remedy the drawback of the prior art discussed above, by providing a front bumper structure for a motor vehicle which takes less space but at the same time meets the imposed safety requirements.

This and other objects are achieved according to the invention by virtue of a front bumper structure having the characteristics set forth in the characterizing part of Claim 1. Further advantageous characteristics of the invention are defined in the dependent claims.

In short, the invention is based in the idea of providing a front bumper structure for a motor vehicle, of the type comprising an upper beam, a bumper fascia which covers the upper beam and extends downwards so as to form a lower edge projecting frontward, and a reinforcement structure for stiffening the lower edge of the bumper fascia, wherein the reinforcement structure comprises a lower beam which supports the lower edge of the bumper fascia from behind, a pair of push-rods interposed between respective side portions of the lower beam and a structural element of the vehicle frame, such as a cross-member or an auxiliary frame for support of the engine, and a pair of side bands interposed each between the lower beam and a respective push-rod so as to provide the lower portion of the bumper structure with a uniform stiffness along the transverse direction and to ensure that the deceleration of the bumper fascia, in case of impact of the lower edge of the bumper fascia against the lower portion of the leg of a pedestrian, has a substantially rectangular profile with a limited peak value, whereby the impact energy is absorbed efficiently and the severity of the injuries to the pedestrian is therefore reduced.

The characteristics and the advantages of the invention will result clearly from the following detailed description, given purely by way of non-limiting example with reference to the appended drawings, in which:
Figure 1 is a plan view from above of a reinforcement structure for a motor vehicle front bumper according to a preferred embodiment of the present invention;

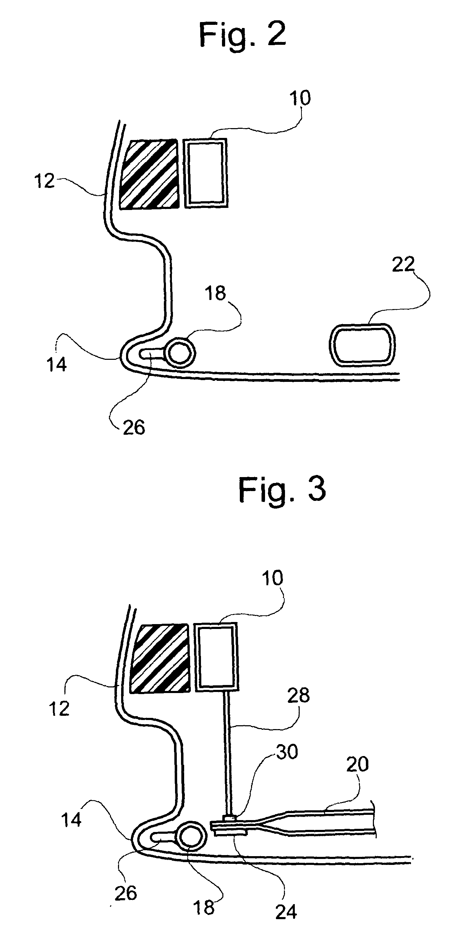

Figure 2 is a section view along line II-II of Figure 1;
Figure 3 is a section view along line III-III of Figure 1; and
Figure 4 is a similar view to that of Figure 1, which illustrates the operation of the reinforcement structure in case of impact of the bumper fascia against the leg of a pedestrian; and
Figure 5 is a graph which illustrates the force exerted by the lower portion of the bumper structure as a function of the displacement of the lower portion of the bumper fascia in case of impact against the leg of a pedestrian.

In the description and the claims which follow, terms such as "front" and "rear", "longitudinal" and "transverse", "upper" and "lower", "inner" and "outer" are to be intended as referred to the mounted condition on a motor vehicle.

With reference to the figures, a front bumper structure for a motor vehicle comprises, in per-se-known manner, an upper beam 10 and a bumper fascia 12 which covers the upper beam 10 and extends downwards so as to form a lower edge 14 projecting frontward. In order to stiffen the lower edge 14 of the bumper fascia 12, a reinforcement structure is provided which is generally indicated 16a and comprises a lower beam 18 supporting the lower edge 14 of the bumper fascia 12 from behind, a pair of push-rods 20 interposed between respective side portions of the lower beam 18 and a structural element of the vehicle frame, here an auxiliary frame 22 for support of the engine, and a pair of side bands 24, each of which is firmly secured on the one hand to the lower beam 18 and on the other to the respective push-rod 20.

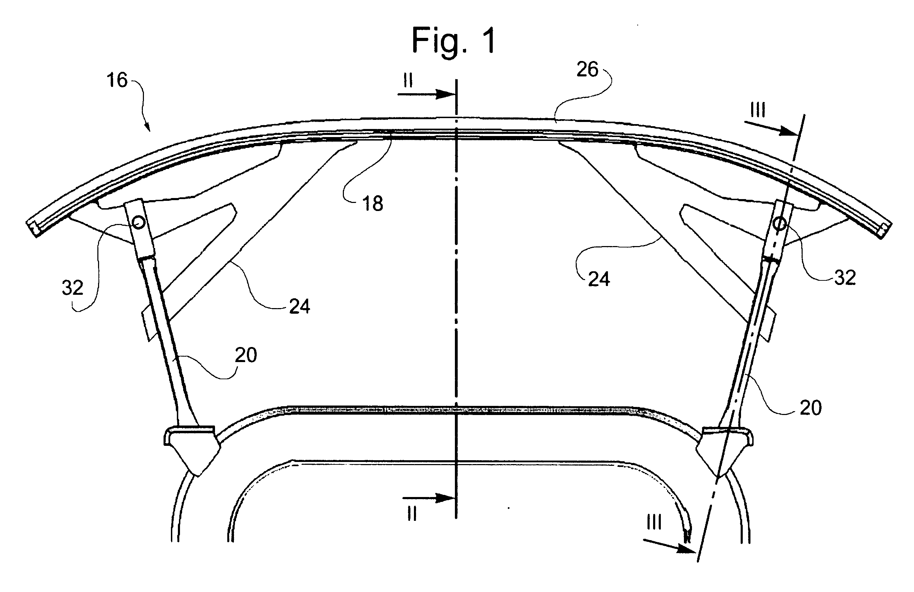

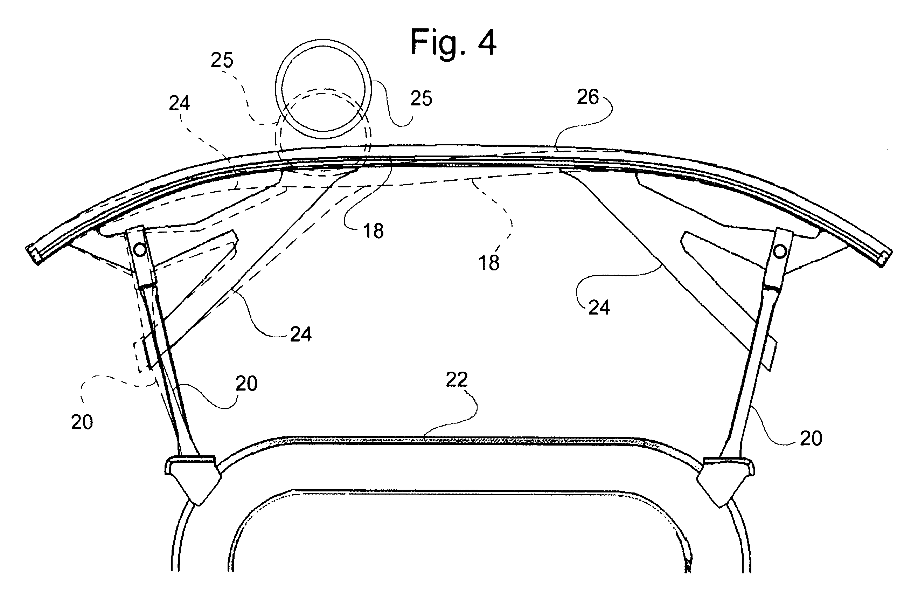

The bands 24 are configured in such a manner that, in case of impact of the bumper fascia 12 against the leg of a pedestrian (schematically shown in Figure 4, where it is indicated 25), they transmit the impact force from the lower beam 18 to the push-rods 20, thus causing these latter to deform under bending. In the preferred embodiment, as shown in Figure 1, each band 24 has a substantially triangular or V-shaped configuration, with the branches of the V connected at their common, transversely inner end to the lower beam 18 and at their opposite ends to a front end portion and to a middle portion, respectively, of the push-rod 20. In the example illustrated in Figure 4, since the point of impact against the pedestrian leg is on the left of the middle plane of the vehicle, the impact force is applied via the left band 24 to the left push-rod 20, which therefore deflects as shown in dashed line.

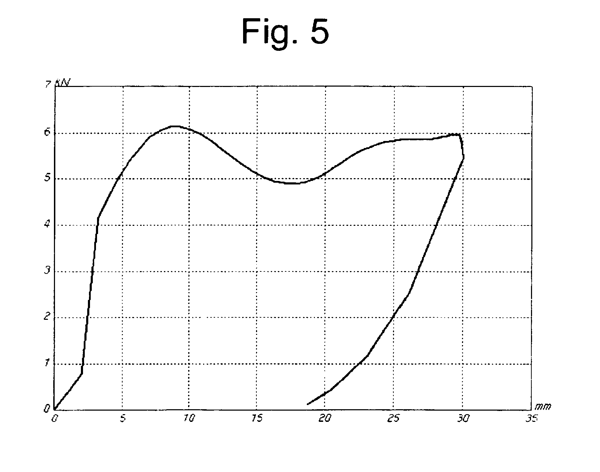

In this way it is ensured that the reinforcement structure 16 has a substantially uniform stiffness along the transverse direction of the vehicle. Moreover, as a result of an impact of the lower edge 14 of the bumper fascia 12 against the lower part of a pedestrian leg, the deceleration of the bumper fascia 12 has a substantially rectangular profile which first rises rapidly and then remains substantially constant during the bending collapse of the push-rods 20 without achieving an excessively high peak value (Figure 5). This makes it possible efficiently to absorb the impact energy and therefore reduces the severity of the injuries to the pedestrian.

A spacer element 26 formed for example by a sheet metal section is preferably interposed between the lower edge 14 of the bumper fascia 12 and the lower beam 18.

As an alternative to the described solution, a variant of embodiment is conceivable in which the lower beam 18 and the push-rods 20 are formed as a single U-bent tubular element. The push-rods 20 can have each a downward deformed portion in order to avoid damages to interface elements of the vehicle in case of impact against an obstacle. If necessary, a tension-rod element 28 can be provided, which connects the push-rods 20 to the upper beam 10 or to another element of the vehicle in order to reduce the vertical vibrations of the reinforcement structure 16. The tension-rod element 28 is preferably provided with a release device 30 having the function to avoid damages to the vehicle structure in case of impact against an obstacle.

According to a variant of embodiment of the invention, in order to help the logistic management of the components of the reinforcement structure 16 during the transport of the structure from the manufacturing site to the mounting site, the push-rods 20 can be free to swing about pins 32 and can be arranged to be firmly fastened to the bands 24 by means of screw connections during the phase of final assembling of the vehicle.

As can be readily noticed from Figure 1, thanks to the special configuration of the bumper structure according to the invention the space between the lower edge 14 of the bumper fascia 12 and the auxiliary frame 22 which supports the vehicle engine remains completely free. Moreover, thanks to the substantially constant stiffness of the reinforcement structure 16 along the transverse direction of the vehicle and to the substantially rectangular deceleration profile of the bumper fascia 12, the impact energy is efficiently absorbed and the severity of the injuries to the pedestrian legs in case of impact is therefore reduced, independently of the position of the impact point along the bumper.

## Claims

1. Front bumper structure for a motor vehicle, comprising
an upper beam (10),
a bumper fascia (12) which covers the upper beam (10) and extends downwards so as to form a lower edge (14) projecting frontward, and
a reinforcement structure (16) for stiffening the lower edge (14) of the bumper fascia (12),
wherein the reinforcement structure (16) comprises a lower beam (18) supporting the lower edge (14) of the bumper fascia (12) from behind and a pair of push-rods (20) interposed between respective transversely outer portions of the lower beam (18) and a structural element (22) of the vehicle frame, **characterized in that** the reinforcement structure (16) further comprises a pair of side bands (24) having each a first branch firmly secured at its one end to the lower beam (18) and at its other end to a middle portion of a respective push-rod (20) so as to be able to transmit an impact force from the lower beam (18) to the respective push-rod (20) and cause this latter to deform under bending, the reinforcement structure (16) being configured in such a manner that it provides the bumper structure with a substantially uniform stiffness along the transverse direction of the vehicle and ensures that in case of impact against a pedestrian the bumper fascia (12) has a substantially rectangular deceleration profile.

2. Bumper structure according to Claim 1, wherein each side band (24) further has a second branch connected at its one end to the said lower beam (18) and to its other end to a side portion of the lower beam (18) arranged transversely outwardly relative to the respective push-rod (20).

3. Bumper structure according to Claim 2, wherein the said first and second branches of each side band (24) have a common transversely inner end, connected to the said middle portion of the lower beam (18).

4. Bumper structure according to any of the preceding claims, wherein the lower beam (18) and the push-rods (20) are formed as a single U-bent tubular element.

5. Bumper structure according to any of Claims 1 to 3, wherein each push-rod (20) is arranged to be first mounted to the respective side band (24) by means of a pin (32) so as to be able to swing about the pin (32) and to be then firmly fastened to the side bands (24) by means of screw connections.

6. Bumper structure according to any of the preceding claims, further comprising a sheet metal spacer element (26) interposed between the lower edge (14) of the bumper fascia (12) and the lower beam (18).

7. Bumper structure according to any of the preceding claims, wherein the push-rods (20) have each a downward deformed portion arranged to avoid damages to interface elements of the vehicle in case of impact against an obstacle.

8. Bumper structure according to any of the preceding claims, further comprising a tension-rod element (28) provided with a release device (30) operable to connect the push-rods (20) to the upper beam (10) to avoid vertical vibrations of the reinforcement structure (16).

## Patentansprüche

1. Frontstoßfängerstruktur für ein Kraftfahrzeug, umfassend
einen oberen Träger (10),
eine Stoßfängerverkleidung (12), welche den oberen Träger (10) bedeckt und sich nach unten erstreckt, so dass sie eine untere Kante (14) bildet, die frontwärts ragt, und
eine Verstärkungsstruktur (16) zum Aussteifen der unteren Kante (14) der Stoßfängerverkleidung (12),
wobei die Verstärkungsstruktur (16) einen unteren Träger (18), welcher die untere Kante (14) der Stoßfängerverkleidung (12) von hinten unterstützt, und ein Paar Druckstangen (20), welche zwischen jeweiligen schrägen Außenabschnitten des unteren Trägers (18) und einem Strukturbauteil (22) des Fahrzeugrahmens eingefügt sind, umfasst,
**dadurch gekennzeichnet, dass** die Verstärkungsstruktur (16) ferner ein Paar Seitenleisten (24) umfasst, welche je einen ersten Zweig haben, der an seinem einen Ende fest an dem unteren Träger (18) und an seinem anderen Ende an einem Mittelabschnitt einer jeweiligen Druckstange (20) gesichert ist, um so eine Aufprallkraft von dem unteren Träger (18) zu der jeweiligen Druckstange (20) übertragen zu können und zu bewirken, dass letztere sich unter Biegung verformt,
wobei die Verstärkungsstruktur (16) derartig gestaltet ist, dass sie die Stoßfängerstruktur mit einer im Wesentlichen gleichförmigen Steifigkeit entlang der Querrichtung des Fahrzeugs versieht und sicherstellt, dass im Fall eines Aufpralls gegen einen Fußgänger die Stoßfängerverkleidung (12) ein im Wesentlichen rechtwinkliges Verzögerungsprofil aufweist.

2. Stoßfängerstruktur nach Anspruch 1, wobei jede Seitenleiste (24) weiter einen zweiten Zweig aufweist, welcher an seinem einen Ende mit dem unteren Träger (18) und an seinem anderen Ende mit einem Seitenabschnitt des unteren Trägers (18) verbunden ist, welcher relativ zu der jeweiligen Druckstange (20) quer nach außen angeordnet ist.

3. Stoßfängerstruktur nach Anspruch 2, wobei der erste und zweite Zweig jeder Seitenleiste (24) ein gemeinsames inneres Querende aufweist, welches mit dem Mittelabschnitt des unteren Trägers (18) verbunden ist.

4. Stoßfängerstruktur nach einem der vorherigen Ansprüche, wobei der untere Träger (18) und die Druckstangen (20) als ein einziges U-gekrümmtes Röhrenelement gestaltet sind.

5. Stoßfängerstruktur nach einem der Ansprüche 1 bis 3, wobei jede Druckstange (20) auf eine Weise angeordnet ist, um zuerst an die jeweilige Seitenleiste (24) mittels eines Bolzens (32) montiert zu werden, so dass sie in der Lage ist, um den Bolzen (32) zu schwenken, und um dann fest an die Seitenleisten (24) mittels Schraubverbindungen befestigt zu werden.

6. Stoßfängerstruktur nach einem der vorherigen Ansprüche, weiter umfassend ein Blechabstandselement (26), welches zwischen der unteren Kante (14) der Stoßfängerverkleidung (12) und dem unteren Träger (18) eingefügt ist.

7. Stoßfängerstruktur nach einem der vorherigen Ansprüche, wobei die Druckstangen (20) jeweils einen nach unten verformten Abschnitt aufweisen, der dazu angeordnet ist, dass Schäden an den Anschlusselementen des Fahrzeugs im Fall eines Aufpralls gegen ein Hindernis vermeiden werden.

8. Stoßfängerstruktur nach einem der vorherigen Ansprüche, weiter umfassend ein Zugstangenelement (28), welches eine Loslösvorrichtung (30) umfasst, mit der Fähigkeit, die Zugstangen (20) mit dem oberen Träger (10) zu verbinden, um vertikale Vibrationen der Verstärkungsstruktur (16) zu vermeiden.

## Revendications

1. Structure de pare-chocs avant pour véhicule à moteur, comprenant
une poutrelle supérieure (10),
une façade de pare-chocs (12) qui couvre la poutrelle supérieure (10) et s'étend vers le bas de façon à former un bord inférieur (14) dépassant vers l'avant, et
une structure de renfort (16) destinée à renforcer le bord inférieur (14) de la façade de pare-chocs (12),
dans laquelle la structure de renfort (16) comprend une poutrelle inférieure (18) supportant le bord inférieur (14) de la façade de pare-chocs (12) depuis l'arrière et une paire de tiges de poussée (20) intercalées entre des parties transversalement extérieures respectives de la poutrelle inférieure (18) et un élément de structure (22) du châssis du véhicule, **caractérisée en ce que** la structure de renfort (16) comprend en outre une paire de brides latérales (24) comportant chacune une première branche fixée fermement à sa première extrémité à la poutrelle inférieure (18) et à son autre extrémité à une partie intermédiaire d'une tige de poussée respective (20) de façon à pouvoir transmettre une force d'impact de la poutrelle inférieure (18) à la tige de poussée respective (20) et amener cette dernière à se déformer sous flexion,
la structure de renfort (16) étant configurée de telle manière qu'elle confère à la structure de pare-chocs une rigidité globalement uniforme le long de la direction transversale du véhicule et assure que, dans le cas d'un impact contre un piéton, la façade de pare-chocs (12) présente un profil de décélération sensiblement rectangulaire.

2. Structure de pare-chocs selon la revendication 1, dans laquelle chaque bride latérale (24) comporte en outre une deuxième branche reliée à sa première extrémité à ladite poutrelle inférieure (18) et à son autre extrémité à une partie latérale de la poutrelle inférieure (18) agencée transversalement vers l'extérieur par rapport à la tige de poussée respective (20).

3. Structure de pare-chocs selon la revendication 2, dans laquelle lesdites première et deuxième branches de chaque bride latérale (24) présentent une extrémité transversalement intérieure commune, reliée à ladite partie intermédiaire de la poutrelle inférieure (18).

4. Structure de pare-chocs selon l'une quelconque des revendications précédentes, dans laquelle la poutrelle inférieure (18) et les tiges de poussée (20) sont formées sous forme d'un seul élément tubulaire plié en U.

5. Structure de pare-chocs selon l'une quelconque des revendications 1 à 3, dans laquelle chaque tige de poussée (20) est agencée pour être montée tout d'abord sur la bride latérale respective (24) au moyen d'une broche (32) de façon à pouvoir pivoter autour de la broche (32) et à être alors fermement fixée aux brides latérales (24) au moyen d'assemblages par vis.

6. Structure de pare-chocs selon l'une quelconque des revendications précédentes, comprenant en outre un élément d'écartement en tôle métallique (26) intercalé entre le bord inférieur (14) de la façade de pare-chocs (12) et la poutrelle inférieure (18).

7. Structure de pare-chocs selon l'une quelconque des revendications précédentes, dans laquelle les tiges de poussée (20) présentent chacune une partie déformée vers le bas agencée pour éviter que des dommages soient occasionnés aux éléments d'interface du véhicule dans le cas d'un impact contre un obstacle.

8. Structure de pare-chocs selon l'une quelconque des revendications précédentes, comprenant en outre un élément de barre de tension (28) doté d'un dispositif de détente (30) pouvant être mis en oeuvre pour relier les tiges de poussée (20) à la poutrelle supérieure (10) afin d'éviter des vibrations verticales de la structure de renfort (16).
